# EUROPÄISCHE PATENTSCHRIFT

(11) **EP 4 025 398 B1**
(45) Veröffentlichungstag und Bekanntmachung des Hinweises auf die Patenterteilung: **10.09.2025**
(21) Anmeldenummer: 20753295.3
(22) Anmeldetag: 23.07.2020
(51) Int. Cl.: B26D 3/00, B26D 5/32, B26D 7/10, B26D 7/18, B26D 1/46, B32B 5/18, B26D 3/28

(54) **VERFAHREN UND VORRICHTUNG ZUM HERSTELLEN EINER HARTSCHAUMSTOFFFOLIE**
METHOD AND DEVICE FOR SOLID FOAM FILM
PROCÉDÉ ET DISPOSITIF DE FABRICATION D'UNE FEUILLE DE MOUSSE DURE

(30) Priorität: 02.09.2019 EP 19194898
(43) Veröffentlichungstag der Anmeldung: 13.07.2022
(73) Patentinhaber: Airex AG, 5643 Sins (CH)
(72) Erfinder: RAKUTT, Dietmar, 6330 Cham (CH); GAUL, Martin, 5244 Birrhard (CH); BURKARD, Franz, 5643 Alikon (CH)
(74) Vertreter: Patent- und Rechtsanwälte Behrmann Wagner PartG mbB
(86) Internationale Anmeldenummer: PCT/EP2020/070859
(87) Internationale Veröffentlichungsnummer: WO 2021/043503

(56) Entgegenhaltungen:
- EP-B2- 1 536 944
- WO-A1-2016/078902
- DE-A1- 102011 084 987
- DE-B3- 102008 046 878
- US-B2- 10 065 332
- GAUGLER & LUTZ OHG: "Ihr starker Partner im Bereich Kernmaterialien für den Leicht-und Sandwichbau Know-how aus über 30 Jahren Erfahrung am Markt Produktübersicht", 30 September 2017 (2017-09-30), Internet, pages 6 - 10, XP055672418, Retrieved from the Internet <URL:https://docplayer.org/61859392-Produktuebersicht-stand-09-2017-ihr-starker-partner-im-bereich-kernmaterialien-fuer-den-leicht-und-sandwichbau.html> [retrieved on 20200228]
- AIREX AG: "www.3ACcorematerials.com Europe ??? Middle East ??? India ??? Africa", 28 February 2017 (2017-02-28), XP055672401, Retrieved from the Internet <URL:https://www.3accorematerials.com/uploads/images/AIREX-Processing-Guidelines_02.2017_EN_1106.pdf> [retrieved on 20200228]

## Beschreibung

Die Erfindung betrifft ein Verfahren gemäß dem Oberbegriff des Anspruchs 1 zum Herstellen einer Hartschaumstofffolie, insbesondere zur Verwendung als Kernschicht in Sandwich-Verbundelementen, mit einer senkrecht zu Ihrer Flächenerstreckung, also senkrecht zu den parallelen Seitenflächen mit, verglichen mit den anderen Seitenflächen größten Flächeninhalt (und damit in Richtung Ihrer Dickenerstreckung) höheren Druckfestigkeit als parallel zur Flächenerstreckung, aus einem Schaumstoffblock aus einem thermoplastischen, extrudierten, insbesondere teilkristallinen und/oder geschlossenporigen PET-Kunststoff-Hartschaummaterial, mit den Schritten des Bereitstellens des Schaumstoffblocks, dessen Kunststoff-Hartschaummaterial entlang einer Dickenerstreckungsachse eine erhöhte Druckfestigkeit aufweist als in einer sich senkrecht hierzu erstreckenden Flächenerstreckung (wobei bevorzugt die Dickenerstreckungsachse eine Verstreckungsachse ist bzw. mit einer solchen zusammenfällt, entlang der das Kunststoff-Hartschaummaterial des Schaumstoffblocks eine verstreckte Polymerstruktur aufweist); des Gewinnens (Abtrennens) der Hartschaumstofffolie aus (von) dem Schaumstoffblock in dem durch Schneiden des Schaumstoffblocks entlang einer sich senkrecht zur Dickenerstreckungsachse erstreckenden Vorschubachse mittels eines, eine sich vorzugsweise senkrecht zur Vorschubachse sowie senkrecht zur Dickenerstreckungsachse erstreckende, Schneidkante aufweisenden Messers ein über die Zeitdauer des Schneidprozesses entlang der Vorschubachse länger werdender Folienabschnitt von dem Schaumstoffblock abgetrennt wird; sowie des Abhebens (d.h. Wegverformens) des abgetrennten Folienabschnittes von dem Messer durch elastisches Biegen des Folienabschnittes, insbesondere um eine sich senkrecht zur Dickenerstreckungsachse und zur Vorschubachse und damit bevorzugt parallel zur Längserstreckung der Schneidkante erstreckende Biegeachse, zur Reduzierung der auf das Messer wirkenden Reibkräfte während des Schneidprozesses. Wie erwähnt, zeichnet sich die Hartschaumstofffolie dadurch aus, dass diese senkrecht zu ihrer Flächenerstreckung eine höhere Druckfestigkeit aufweist als parallel zur Flächenerstreckung - es wird vermutet, dass diese erhöhte Druckfestigkeit auf eine in Extrusionsrichtung verstreckte Polymerstruktur senkrecht zur Flächenerstreckung zurückzuführen ist.

Soweit nicht anders angegeben, soll für den Zweck der nachfolgenden Beschreibung davon ausgegangen werden, dass es sich bei dem Kunststoff-Hartschaummaterial um PET-Kunststoff-Hartschaummaterial handelt.

Ferner betrifft die Erfindung eine Hartschaumfolie gemäß Anspruch 1, die bevorzugt mit einem erfindungsgemäßen Verfahren hergestellt ist, wobei die Folie aus einem thermoplastischen, extrudierten, insbesondere teilkristallinen und/oder geschlossenporigen Kunststoff-Hartschaummaterial gebildet ist, das eine sich senkrecht zur Hartschaumstofffolienflächenerstreckung und damit in Richtung ihrer Dickenerstreckung verstreckte Polymerstruktur aufweist, wobei die Hartschaumstofffolie mindestens eine durch einen Messer-Schneidprozess (insbesondere keinen Heißelementschneidprozess, wie beispielsweise einen Heißdrahtschneidprozess) erhaltene Flächenseite aufweist (bevorzugt zwei parallele solcher Flächenseiten) und eine senkrecht zur Flächenerstreckung, d.h. in Richtung der Dickenerstreckungsachse gemessene Mindest-Dickenerstreckung von 0,5mm, bevorzugt von 3mm, ganz besonders bevorzugt von 4mm, noch weiter bevorzugt von 5mm und/oder von weniger als 10cm, bevorzugt weniger als 5cm, noch weiter bevorzugt weniger als 1cm, besonder bevorzugt von 1mm bis 5mm..

Es sind PET-Hartschaumfolien bekannt, die unmittelbar in der gewünschten Dickenerstreckung extrudiert werden, und die dann eine sich in der Extrusionsrichtung und damit senkrecht zu ihrer Dickenerstreckung, d.h. entlang ihrer Flächenerstreckung verstreckte Polymerstruktur aufweisen. Nachteilig ist die geringe Druckfestigkeit senkrecht zur Flächenerstreckung, wodurch sich derartige Folien weniger gut als Kernschicht in Sandwichverbundelementen eignen. Derartige PET-Hartschaumfolien werden unter anderem in Thermoformprozessen zur Ausbildung von Behältnissen, insbesondere in der Form von Schalen zur Aufnahme von Lebensmitteln eingesetzt.

Daneben sind Weichschaumstoffe bekannt, die sich generell, unabhängig von einer allfälligen Anisotropie der mechanischen Eigenschaften problemlos in alle Richtungen schälen lassen.

Ferner sind für strukturelle Anwendungen, insbesondere für den Einsatz als Kernschicht in Sandwich-Verbundelementen Hartschaumstofffolien bekannt geworden, die zur Aufnahme vergleichsweise großer Drucklasten senkrecht zu ihrer Flächenerstreckung eine in Richtung ihrer Dickenerstreckung, d.h. senkrecht zu ihrer Flächenerstreckung verstreckte Polymerstruktur aufweisen. Solche Hartschaumstofffolien werden aufgrund des damit zusammenhängenden hohen Materialverlustes nicht durch Sägen sondern durch Schneiden mittels eines Messers aus einem Schaumstoffblock gewonnen, der wiederum beispielsweise wie in der EP 1 536 944 B2 beschrieben hergestellt werden kann. Hierzu wird zunächst eine Hartschaumstoffbahn durch Extrudieren gewonnen, die in mehrere Körpersegmente unterteilt wird, die dann an ihren Flächenseiten miteinander verbunden werden. Wird nun ein so erhaltener Schaumstoffblock senkrecht zur Flächenerstreckung der Verbindungsflächen in Scheiben geschnitten, so weisen diese die gewünschte, senkrecht zu ihrer Flächenerstreckung verstreckte Polymerstruktur auf, die aus dem Extrusionsprozess resultiert.

Beim Einsatz von Messern zum Herstellen der vorerwähnten Scheiben bzw. Hartschaumstofffolien besteht das Problem, dass der jeweils abgetrennte Folienabschnitt ohne weitere Maßnahmen über den an die Schneidkante angrenzenden Teil des Messers gleiten und dieses auf diese Weise klemmen würde. Aufgrund der hierdurch auftretenden Reibkräften käme es zu Problemen beim Schneidprozess - insbesondere könnte dieser zum Erliegen kommen bzw. das Messer könnte aufgrund der Reibkräfte nicht mehr, wie es für ein Schneidprozess notwendig ist, senkrecht zur Vorschubachse sowie senkrecht zur Dickenerstreckungsachse verstellt bzw. bewegt werden. Auch wäre die Erwärmung des Messers zu hoch, was es zu vermeiden gilt, um ein Anschmelzen des Kunststoff-Schaumstoffmaterials und damit eine Versiegelung der Schnittflächen der Hartschaumstofffolie zu verhindern. Um solche Reibungsprobleme zu vermeiden wird der jeweils bereits mittels des Messers von dem verbleibenden Schaumstoffblock abgetrennte Folienabschnitt von dem Messer weggebogen, d.h. hinter der Schneidkante von dem Messer abgehoben. Dieser Biegevorgang ist reversibel, d.h. elastisch. Das Biegen einer Hartschaumstofffolie ist in der Praxis jedoch nur bis zu einer sehr geringen Dickenerstreckung von etwa 1mm möglich. Bei dickeren Hartschaumstofffolien versagt das Verfahren - die Hartschaumstofffolie bricht, sodass bisher mittels eines Messer-Schneidprozesses keine dickeren Hartschaumstofffolien herstellbar sind, die eine sich senkrecht zu ihrer Flächenerstreckung verstreckte Polymerstruktur aufweisen. Der Bedarf an solchen Hartschaumstofffolien, insbesondere mit einer Dickenerstreckung von mindestens 0,5mm oder mehr wäre jedoch insbesondere für industrielle Anwendungen groß.

Die US 10 065 332 B2 betrifft eine Vorrichtung zum Spalten von Schaumstoffkörpern, wobei mittels eines Bandmessers, das von Führungsplatten geführt oder umgeben ist, Lagen aus einem Schaumstoffkörper abgetrennt und auf eine Ableitvorrichtung oder Abtransportvorrichtung überführt werden.

Die WO 2016 078 902 A1 handelt von Verfahren zur flächigen Trennung von PE-, PP-, PVC-, PMMA- oder P(M)I- Hartschäumen zur Gewinnung von Folien oder dünnen Platten, wobei der Hartschaum erst flexibilisiert und anschließend mit einem Messer geschnitten wird, wobei zur Flexibilisierung der Hartschaum vor dem Schneiden in Wasser gelagert wird und/oder auf eine Temperatur erhitzt oder eingestellt wird, die minimal 15 °C und maximal 1 °C unterhalb der Schäumungstemperatur des Hartschaumstoffs liegt. Die Druckschrift beinhaltet keinen Hinweis darauf, dass auch PET-Kunststoff-Hartschaummaterial mit dem Verfahren bearbeitet werden kann. Außerdem liegt die Schäumungstemperatur bei derartigen Hartschaummaterialien in der Regel deutlich über dem Schmelztemperatur oder Glasübergangstemperatur.

Die EP 1 536 944 B2 betrifft ein flächenförmiges Strukturelement für Kernschichten von Sandwich-Verbundelementen. Die DE 10 2008 046878 B3 lehrt einen Verbundwerkstoff mit einer PET-Schaumstoff-Kernschicht. Die DE 10 2011 084 987 A1 offenbart eine Schneidemaschine mit einem umlaufenden Bandmesser.

Das Produktdatenblatt der Gaugler & Lutz Ohg "Ihr starker Partner im Bereich Kernmaterialien für den Leicht- und Sandwichbau Konw-how aus über 30 Jahren Erfahrung am Markt", 30. September 2017, Seiten 6-10, zeigt insbesondere mechanische Eigenschaften von PET-Hartschaumstoffplatten für den Einsatz als Kernmaterial in Sandwich-Strukturbauteilen.

Die Verarbeitungsrichtlinien der Airex AG unter "www.3ACcorematerials.com", 28. Februar 2017, beinhalten Angaben zur Herstellung von Sandwich-Strukturbauteilen mit Hartschaumkernen.

Die Veröffentlichung einer Konferenzankündigung "JEC World 2018 preview: 3A Composites | CompositesWorld", 24. Februar 2018 unter "www.compositesworld.com" führt Vorteile eines PET-Schaumstoffmaterials auf.

Ausgehend von dem vorgenannten Stand der Technik liegt der Erfindung daher die Aufgabe zugrunde, ein Verfahren sowie eine Vorrichtung anzugeben, mit denen sich Hartschaumstofffolien im Wesentlichen beliebiger Dicke mittels eines Messers aus einem Schaumstoffblock abtrennen lassen, wobei die Druckfestigkeit der resultierenden Hartschaumstofffolie parallel zu ihrer Dickenerstreckung, d.h. senkrecht zu ihrer Flächenerstreckung höher sein soll als parallel zur Flächenerstreckung. Ferner besteht die Aufgabe darin, eine solche Hartschaumstofffolie sowie ein damit hergestelltes Sandwich-Verbundelement anzugeben.

Diese Aufgabe wird hinsichtlich des Verfahrens mit den Merkmalen des Anspruchs 1 gelöst, d.h. bei einem gattungsgemäßen Verfahren dadurch, dass das Kunststoff-Hartschaummaterial, insbesondere der Schaumstoffblock und/oder der abgetrennte Folienabschnitt zumindest abschnittsweise auf eine Bearbeitungstemperatur oberhalb von 40°C und unterhalb der Schmelztemperatur des Kunststoff-Hartschaummaterials erwärmt wird, derart, dass das Kunststoff-Hartschaummaterial (durch die Erwärmung) so elastisch biegbar wird, dass der abgetrennte Folienabschnitt durch elastisches Biegen nach Passieren der Schneidkante des Messers von dem Messer abhebbar (reversibel bzw. elastisch wegdeformierbar) ist. Die Polymermolekülverstreckungsachse verläuft dabei bevorzugt parallel zu der Hartschaumstofffoliendimension mit der geringsten Erstreckung, also in Richtung ihrer Dickenerstreckung. Die Druckfestigkeit des abgetrennten Folienabschnittes ist in Richtung der Dickenerstreckung am höchsten, d.h. höher als in die sich senkrecht dazu erstreckende Flächenerstreckung.

Hinsichtlich der Vorrichtung wird die Aufgabe mit den Merkmalen des Anspruchs 13 gelöst, d.h. bei einer gattungsgemäßen Hartschaumstofffolienschneidvorrichtung dadurch, dass Heizmittel vorgesehen sind, die zum zumindest abschnittsweisen Erwärmen des Kunststoff-Hartschaummaterials, insbesondere des Schaumstoffblocks und/oder des abgetrennten Folienabschnittes auf eine Bearbeitungstemperatur oberhalb von 40°C und unterhalb der Schmelztemperatur des Kunststoff-Hartschaummaterials, ausgebildet sind derart, dass das Kunststoff-Hartschaummaterial so elastisch biegbar wird, dass der abgetrennte Folienabschnitt durch elastisches Biegen nach Passieren der Schneidkante des Messers von dem Messer abhebbar ist.

Vorteilhafte Weiterbildungen sind in den Unteransprüchen angegeben. In dem Rahmen der Erfindung fallen sämtliche Kombinationen aus zumindest zwei von den in der Beschreibung, den Ansprüchen und/oder Figuren offenbarten Merkmalen.

Zur Vermeidung von Wiederholungen sollen verfahrensgemäß offenbarte Merkmale auch als vorrichtungsgemäß offenbart gelten und beanspruchbar sein. Ebenso sollen vorrichtungsgemäß offenbarte Merkmale auch als verfahrensgemäß offenbart gelten und beanspruchbar sein.

Der Erfindung liegt der Gedanke zugrunde, bei einem gattungsgemäßen Hartschaumstofffolienherstellverfahren bzw. einer gattungsgemäßen Hartschaumstofffolienschneidvorrichtung die elastische (reversible) Verformbarkeit, d.h. Biegbarkeit des Kunststoff-Hartschaummaterials, konkret des Schaumstoffblocks und/oder des bereits jeweils abgetrennten Folienabschnittes durch Zufuhr von Wärmenergie auf eine Bearbeitungstemperatur oberhalb der Raumtemperatur herzustellen bzw. zu gewährleisten. Dabei ist/wird die Bearbeitungstemperatur so gewählt bzw. die entsprechenden Heizmittel sind zum Erwärmen des Kunststoff-Hartschaummaterials auf eine solche Bearbeitungstemperatur so eingerichtet, dass diese größer ist als 40°C und geringer ist als die Schmelztemperatur des Kunststoff-Hartschaummaterials, derart, dass das Kunststoff-Hartschaummaterial (verglichen mit einer Raumtemperatur von 22°C) so elastisch biegbar wird, dass der abgetrennte Folienabschnitt durch elastisches Biegen nach Passieren der Schneidkante des Messers insbesondere um eine sich senkrecht sowohl zur Vorschubachse als auch zur Dickenerstreckungsachse erstreckende Biegeachse, von dem Messer abhebbar ist. Mit anderen Worten wird erfindungsgemäß im Rahmen eines Messer-Kunststoff-Hartschaummaterialschneidprozesses, bei dem der Schaumstoffblock und das Messer relativ zueinander in der (sich vorzugsweise senkrecht zur Längserstreckung der Schneidkante des Messers erstreckenden Vorschubachse relativ zueinander verstellt werden) das Kunststoff- Hartschaummaterial derart (auf eine geeignete Bearbeitungstemperatur) erwärmt, dass der abgetrennte Folienabschnitt, insbesondere auch bei einer Dickenerstreckung von mindestens 0,5 Millimetern (gemessen senkrecht zur Flächenerstreckung des Folienabschnittes) so elastisch biegbar wird, dass der abgetrennte Folienabschnitt von dem, insbesondere flächigen Messer nach Passieren der Schneidkante abgehoben bzw. weggebogen werden kann, um somit Reibungserscheinungen am Messer zu verhindern oder zumindest zu reduzieren. Dabei wird die benötigte elastische Biegbarkeit bei dicken Folien, insbesondere mit Dicken ab 2mm oder 3mm oder mehr erst durch den Erwärmungsschritt auf die Bearbeitungstemperatur hergestellt bzw. gewährleistet. Das Erwärmen des Kunststoff-Hartschaummaterials auf die (erhöhte) Bearbeitungstemperatur ist nicht nur vorteilhaft in Bezug auf eine daraus resultierende erleichterte Biegbarkeit. Durch die Einbringung der Wärmeenergie nimmt auch die Härte des Materials ab, sodass das Messer besser bzw. leichter/widerstandsfreier in das Hartschaum-Kunststoffmaterial schneiden kann und der Schneiddruck abnimmt. Ist der Schneiddruck nämlich zu groß, versucht das Messer dem Druck auszuweichen und bewegt sich limitiert durch eine mögliche Messereinspannung auf und ab, wodurch es "Schläge" ins Material geben kann. Durch die Erwärmung wird dies vermieden. Auch wird die Gefahr einer Messerzerstörung durch einen deutlich zu hohen Schneiddruck (Messerdruck) vermieden. Der bei einem erfindungsgemäßen Verfahren zum Einsatz kommende Schaumstoffblock zeichnet sich dadurch aus, dass dieser in Richtung der Dickenerstreckungsachse eine höhere Druckfestigkeit aufweist als senkrecht hierzu, d.h. als entlang der Vorschubachse und als entlang der Längserstreckung der Schneidkante des zum Einsatz kommenden Messers, d.h. als entlang der Messerbewegungsachse. Bevorzugt wird die erhöhte Druckfestigkeit entlang der Dickenerstreckungsachse erzielt durch bzw. resultiert aus einer Verstreckung der Polymerstruktur des Hartschaummaterials des Schaumstoffblocks entlang der Dickenerstreckungsachse, die dann insoweit mit einer Verstreckungsachse zusammenfällt.

Wie später noch erläutert werden wird, gibt es im Hinblick auf die konkrete Realisierung des Erwärmungsschrittes unterschiedliche Möglichkeiten. So ist es denkbar, den Schaumstoffblock, insbesondere im gesamten, vor und/oder während des Schneidprozesses in einer entsprechenden Umgebung, insbesondere einem Ofen zu erwärmen, bis die Bearbeitungstemperatur erreicht wird, die ein reversibles Biegen des abgetrennten Folienabschnittes von dem Messer weg ermöglicht, insbesondere auch bei größeren Dickenerstreckungen von mindestens 0,5mm, vorzugsweise mindestens 3mm, ganz besonders bevorzugt mindestens 4mm, noch weiter bevorzugt mindestens 5mm und/oder von weniger als 10cm, bevorzugt weniger als 5cm, noch weiter bevorzugt weniger als 1 cm. Alternativ zu einer Erwärmung des Schaumstoffblocks batchweise in einem Ofen ist es möglich, den Schaumstoffblock, insbesondere partiell durch Wärme-Bestrahlen, insbesondere mittels eines IR-Strahlers oder Infrarotheizmittels zu erwärmen, bevorzugt entlang der Vorschubachse vor und/oder nach und/oder in einem Kontaktbereich des Schaumstoffblocks zur Schneidkante des Messers. Diese Vorgehensweise hat den Vorteil, dass der Schaumstoffblock nicht vollständig durcherwärmt werden muss, sondern nur im Wesentlichen oberflächlich bis zu einer Tiefe die der Dickenerstreckung der abzutrennenden Hartschaumstofffolie entspricht.

Dementsprechend sieht eine vorteilhafte Ausführungsform des Verfahrens vor, dass die Erwärmung mit einem Infrarotheizmittel durchgeführt wird, wobei das Infrarotheizmittel derart auf das PET-Kunststoff-Hartschaummaterial abgestimmt ist, dass eine Eindringtiefe der Infrarotstrahlung zumindest gleich groß ist wie eine Stärke oder Dickenerstreckung des abzutrennenden Folienabschnitts oder der abzutrennenden Hartschaumstofffolie. Über die entsprechende Wahl der Infrarotheizmittel bezogen auf das PET-Kunststoff-Hartschaummaterial wird erreicht, dass durch primären Wärmeübergang, also nicht durch Wärmekonvektion, in den Schaumstoffblock eine jeweils oberflächliche Schicht mit einer Stärke oder Dickenerstreckung kurzfristig, also unmittelbar nach Einstrahlung der Infrarotstrahlung, zumindest aber deutlich schneller als durch Wärmekonvektion, erhitzt oder erwärmt wird, die zumindest der Schichtdicke, Stärke oder Dickenerstreckung der abzutrennenden Hartschaumstofffolie oder des abzutrennenden Folienabschnitts entspricht. Damit kann sichergestellt werden, dass auch bei einer iterativen partiellen Erwärmung des Schaumstoffblocks jeweils vor dem entsprechenden Schneidevorgang im Oberflächenbereich des Schaumstoffblocks eine kurzfristige und gleichzeitig in der Dickenerstreckung ausreichend tiefgehende Erwärmung bereitgestellt wird. In diesem Zusammenhang hat es sich für eine Vielzahl von PET-Kunststoff-Hartschaummaterialien als vorteilhaft herausgestellt, wenn Infrarotheizmittel einen Kurzwellenanteil von 0,7 bis 2 µm Wellenlänge aufweist, der mindestens 20% der Strahlungsleistung bereitstellt und dass Infrarotheizmittel ferner einen Langwellenanteil mit einer Wellenlänge von größer als 4 µm aufweist, der seinerseits wiederum nicht mehr als 35 % der Strahlungsleistung bereitstellt oder ausmacht. Durch einen derartigen Infrarotstrahler oder ein Infrarotheizmittel kann erreicht werden, dass in dem oben genannten Bereich der bevorzugten Dickenerstreckungen, ganz besonders bevorzugt in einem Bereich von Dickenerstreckungen bis zu 10 mm der abzutrennenden Hartschaumstofffolie, die Eindringtiefe der Infrarotstrahlung mindestens der Dickenerstreckung der abzutrennenden Hartschaumstofffolie oder des abzutrennenden Folienabschnitts entspricht.

Erfindungsgemäß ist vorgesehen, dass eine Oberflächentemperatur des Schaumstoffblocks an einer in der Vorschubachse vor der Schneidkante und vor der Position eines zur Erwärmung vorgesehenen Heizmittels, insbesondere eines Infrarotheizmittels, angeordneten Position, bevorzugt kontaktlos, gemessen wird und die gemessene Oberflächentemperatur als Eingangsgröße für die Regelung der Strahlungsleistung des Heizmittels, insbesondere des Infrarotheizmittels, dient. Dieser Ausführungsform liegt die Erkenntnis zugrunde, dass ein zu großer Eintrag von Wärme in den Schaumstoffblock eine schädliche Auswirkung auf den abzutrennenden Folienabschnitt oder auf die abzutrennende Hartschaumstofffolie ausüben kann. Insbesondere kann ein zu großer Wärmeeintrag zu einer unerwünschten Welligkeit der abgetrennten Folienabschnitte führen, welche nach jetzigem Erkenntnisstand mit der entsprechenden thermischen Expansion des Materials einerseits und den begrenzten Expansionsmöglichkeiten im Rahmen der Vorrichtung andererseits in Verbindung stehen. Dementsprechend wird mit der geregelten Einstrahlung von Wärmeenergie, insbesondere mit der geregelten Einstrahlung von Infrarotstrahlung, sichergestellt, dass zwar einerseits die Oberfläche des Schaumstoffblocks und der darunter befindliche Bereich des Schaumstoffblocks eine erhöhte Temperatur aufweist, die ein vorteilhaftes Abheben der abgetrennten Folie oder des abgetrennten Folienabschnitts ermöglichen, gleichzeitig aber die Wärmemenge oder der Wärmeeintrag eine Obergrenze nicht übersteigt, der zu Qualitätseinbußen bei den abgetrennten Folienabschnitten führt.

Weiter bevorzugt kann dabei vorgesehen sein, dass die Oberflächentemperatur mit einem Temperatursensor zur kontaktlosen Temperaturmessung bestimmt wird. Dazu kann beispielsweise ein Pyrometer zum Einsatz kommen. Weiter bevorzugt kann vorgesehen sein, dass in Vorschubrichtung des Schaumstoffblocks der Abstand zwischen der Messposition oder des Messpunkts der Oberflächentemperatur bezogen auf die Heizmittel, insbesondere das Infrarotheizmittel, und die gewählte Vorschubgeschwindigkeit so gewählt wird, dass die Zeit zwischen Erfassung der Oberflächentemperatur über die Erzeugung einer entsprechenden Regelgröße zur Beeinflussung der Strahlungsleistung der Heizmittel, insbesondere der Infrarotheizmittel, in Bezug auf die Vorschubgeschwindigkeit und unter Berücksichtigung der Einschwingzeit oder der Einstellzeit einer geänderten Strahlungsleistung seitens der Heizmittel, so gewählt wird, dass eine an die gemessene Oberflächentemperatur angepasste Strahlungsleistung dann auf die Oberfläche des Schaumstoffblocks einwirkt, wenn der entsprechende Bereich oder der entsprechende Abschnitt der Oberfläche des Schaumstoffblocks in den Bereich der von den Heizmitteln, insbesondere den Infrarotheizmitteln, erzeugten Wärmestrahlung eintritt. Dadurch wird sichergestellt, dass die angepasste Strahlungsleistung jeweils zu der vermessenen Oberfläche oder Oberflächentemperatur in Übereinstimmung gebracht wird.

Bei einer Variation der Vorschubgeschwindigkeit kann dementsprechend vorgesehen sein, dass entweder der Messpunkt der Oberflächentemperatur variiert wird oder, soweit möglich, die Regelgröße zur Einstellung der Strahlungsleistung der Heizmittel mit einer Verzögerung versehen oder mit einer Verzögerung an die Heizmittel weitergegeben wird.

Auf der Vorrichtungsebene ist erfindungsgemäß neben einem entsprechenden Temperatursensor auch eine Regeleinheit zur Regelung der Strahlungsleistung der Heizmittel, insbesondere der Infrarotheizmittel, in Abhängigkeit von zumindest einer Regelgröße, insbesondere in Abhängigkeit einer gemessenen Oberflächentemperatur des Schaumstoffblocks, vorgesehen, wobei die Oberflächentemperatur des Schaumstoffblocks an einer in der Vorschubachse vor der Schneidekante und vor der Position der Heizmittel, insbesondere Infrarotheizmittel, angeordneten Position ermittelt oder gemessen wird.

Eine weitere besonders bevorzugte Ausgestaltung des Verfahrens sowie der Vorrichtung kann zudem vorsehen, dass an einer den Heizmitteln, insbesondere den Infrarotheizmitteln, nachgeordneten Position im Hinblick auf die Vorschubrichtung ein weiterer Temperatursensor die Oberflächentemperatur des Schaumstoffblocks misst, wobei die gemessene Temperatur entweder lediglich als Verifikation eines ausreichend starken, aber nicht zu großen Wärmeeintrags in den Schaumstoffblock herangezogen und ggf. dokumentiert wird. Alternativ kann jedoch auch vorgesehen sein, dass die bezüglich der Vorschubachse und der Vorschubrichtung hinter den Heizmitteln, insbesondere hinter den Infrarotheizmitteln, gemessene Oberflächentemperatur des Schaumstoffblocks, welche bevorzugt über eine weitere Temperatursonde oder einen weiteren Temperatursensor bevorzugt kontaktlos gemessen wird, als weitere Regelgröße für die Regelung der Strahlungsleistung der Heizmittel verwendet wird und zu diesem Zweck einer entsprechenden Regeleinheit zugeführt oder zur Verfügung gestellt wird.

Im Gegensatz zu bekannten Heißelementschneidprozessen, insbesondere Heißdrahtschneidprozessen handelt es sich bei den Messern bevorzugt um ein nicht mit elektrischem Strom durchflossenes und/oder aktiv beheiztes Messer - bevorzugt resultiert die einzige Temperaturzunahme aus den mechanischen Reibeffekten während des Schneidprozesses und/oder der Umgebungstemperatur.

Bevorzugt wird der Schneidvorgang derart ausgeführt, dass das Messer und der Schaumstoffblock nicht nur entlang der Vorschubachse, also insbesondere senkrecht zur Längserstreckung der Schneidkante innerhalb des Schaumstoffblocks relativ zueinander bewegt bzw. verstellt werden können, sondern zusätzlich eine Relativbewegung zwischen Schaumstoffblock und Messer senkrecht zur Vorschubachse sowie senkrecht zur Dickenerstreckungsachse realisiert ist, beispielsweise in Form einer Hin- und Herbewegung des Messers und/oder des Schaumstoffblocks entlang der vorerwähnten Messerbewegungsachse oder durch Antreiben des Messers in einer Umlaufrichtung bei Realisierung des Messers als in der Umlaufrichtung umlaufendes Messer, insbesondere Bandmesser. Letztgenannte Alternative ist bevorzugt, da das dann als umlaufendes Messer ausgebildete Messer ausreichend Zeit hat vor einem erneuten Kontakt eines umlaufenden Abschnittes nach einem erfolgten Schnittkontakt mit dem Schaumstoffblock abzukühlen. Bevorzugt steigt die Temperatur im Schneibereich bzw. im Bereich der Schnittkante des Messers während des Schneidprozesses nicht über die Schmelztemperatur des Kunststoff-Hartschaummaterials um eine Versiegelung oder Teilversiegelung der Schnittfläche, d.h. der Flächenseiten der Hartschaumstofffolie zu verhindern.

Um den (Hart-)Schaumstoffblock besonders komfortabel bzw. leichtgängig zu schneiden, hat es sich als vorteilhaft herausgestellt, wenn das Kunststoff-Hartschaummaterial, insbesondere der Schaumstoffblock und/oder der abgetrennte Folienabschnitt, vollständig oder abschnittsweise auf eine Bearbeitungstemperatur oberhalb der Glasübergangstemperatur des Kunststoff-Hartschaummaterials abzüglich 20°C, weiter bevorzugt abzüglich 15°C, noch weiter bevorzugt abzüglich 10°C, ganz besonders bevorzugt abzüglich 5°C erwärmt wird und ganz besonders bevorzugt auf eine Bearbeitungstemperatur oberhalb der Glasübergangstemperatur. Um im Falle von Hartschaumzusätzen ein Zusammenfallen bzw. eine Zerstörung des Schaums außerhalb des unmittelbaren Schneidbereichs bereits bei Temperaturen unterhalb der Schmelztemperatur des Hartschaummaterials zu vermeiden, hat es sich als vorteilhaft herausgestellt, wenn die Bearbeitungstemperatur unterhalb von 210°C, weiter bevorzugt unterhalb von 180°C, noch weiter bevorzugt unterhalb von 150°C gewählt wird.

Gemäß einer ersten Ausführungsvariante ist die Schneidkante des Messers geradlinig ausgebildet, d.h. sägezahnfrei. Gemäß einer alternativen Ausführungsform kann das Messer auch mit einem Wellschliff versehen sein - wesentlich ist, dass eine Spanbildung möglichst minimiert bzw. vermieden wird.

Bevorzugt ist die senkrecht zu einer Schneidekantenlängserstreckung sowie senkrecht zu einer sich senkrecht hierzu erstreckenden Schneidmessertiefe gemessene Materialstärke des Messers aus einem Wertebereich zwischen 0,5mm und 3mm gewählt und beträgt ganz besonders bevorzugt 1mm. Im Hinblick auf die wirksame Schneidkantenlänge ist es bevorzugt, wenn diese größer ist als 0,5m, und ganz besonders bevorzugt aus einem Wertebereich zwischen 0,9m und 3m, bevorzugt zwischen 0,9m und 2,5, weiter bevorzugt zwischen 1m und 2m, noch weiter bevorzugt zwischen 1m und 1,5m gewählt ist. Im Hinblick auf die in der Vorschubrichtung des Messers relativ zum Schaumstoffblock gemessene, sich senkrecht zur Materialstärke sowie senkrecht zur Schneidkantenlänge erstreckende Messertiefe ist es bevorzugt, wenn diese aus einem Wertebereich zwischen 30mm und 150mm, ganz besonders bevorzugt zwischen 40mm und 100mm gewählt ist.

Besonders bevorzugt wird das elastische Biegen derart (reversibel) durchgeführt, dass ggf. bis auf Wechselwirkungen des Kunststoff-Hartschaummaterials mit der Schneidkante des Messers während des Schneidprozesses keine plastische Dimensionsänderung, bevorzugt keine plastische Formung der Hartschaumstofffolie resultiert. Anders ausgedrückt ändert sich durch den Biegeschritt und/oder den Erwärmungsschritt die Dimension der Hartschaumstofffolie weder entlang der Dickenerstreckungsachse noch entlang der Vorschubachse noch entlang der Messerbewegungsachse.

Bevorzugt ist der Schneidwinkel beim Schneidprozess aus einem Wertebereich zwischen 5° und 30°, insbesondere zwischen 8° und 20° gewählt.

Als besonders zweckmäßig hat es sich herausgestellt, wenn der Schaumstoffblock und/oder das Kunststoffhartschaummaterial und/oder die Hartschaumfolie eine Dichte aus einem Wertebereich zwischen 40 und 250kg/m³ aufweist.

Im Rahmen der Erfindung wird unter einem Hartschaumstoffmaterial gemäß DIN 7726 ein Kunststoff-Schaumstoffmaterial verstanden, welches bei einer Stauchung um 10% eine Druckspannung von größer als 80kPa aufweist. Besonders bevorzugt ist es, wenn sich das Kunststoff-Hartschaummaterial dadurch auszeichnet, dass ein Quader mit den Kantenlängen 20cm x 2,5cm x 2,5cm bricht, wenn er bei einer Temperatur zwischen 15 und 25°C um einen Zylinder mit einem Durchmesser von 2,5cm gewickelt wird und zwar gemäß der Norm ASTM D 1566-82 mit einer konstanten Wickelgeschwindigkeit von einer Umdrehung/Runde pro 5 Sekunden.

Ganz besonders bevorzugt es, wenn der Schaumstoffblock aus einer Mehrzahl von extrudierten Körpersegmenten zusammengesetzt ist, wobei die Körpersegmente an ihren aneinander anstoßenden Flächenseiten unter Ausbildung von in Draufsicht entlang der Dickenerstreckungsachse der Polymerstrukturen der Körpersegmente auf eine Flächenseite der Hartschaumstofffolie oder des Schaumstoffblocks zueinander parallelen oder sich kreuzenden Versteifungsstegen miteinander verbunden, insbesondere verschweißt und/oder verklebt sind. Im Hinblick auf eine Möglichkeit zur Ausbildung des Schaumstoffblocks durch Verschweißen wird hierbei ausdrücklich auf die EP 1 536 944 B2 verwiesen, die diesbezüglich als zur vorliegenden Offenbarung gehörig offenbart gelten soll - hier werden die Körpersegmente so verschweißt, dass sich eine netzartige, versteifend wirkende Stegstruktur aus sich kreuzenden Schweißnähten ergibt. Alternativ hierzu ist es möglich, insbesondere bei Realisierung kleinvolumiger Schaumstoffblöcke, wenn die Körpersegmente so verbunden sind, dass sich nicht kreuzende, sondern nur zueinander parallele Versteifungsstege, d.h. Schweißnähte resultieren. Bei Realisierung eines Schweißvorgangs sind die Schweißnähte, d.h. die Versteifungsstege porenarm oder porenfrei, wobei bevorzugt kein Klebstoffmaterial enthalten ist. Alternativ ist es denkbar zueinander parallele oder sich kreuzende Versteifungsstege durch Verkleben der Körpersegmente zu erzeugen - grundsätzlich denkbar ist auch eine Kombination aus Schweiß- und Klebevorgängen, wobei beispielsweise zueinander parallele Schweißnähte und senkrecht hierzu verlaufende, zueinander parallele Klebeflächen vorgesehen sind. Es können auch Schaumstoffblöcke ohne Versteifungsstege eingesetzt werden, die senkrecht zu ihrer Flächenerstreckung eine höhere Druckfestigkeit aufweisen als parallel zur Flächenerstreckung.

Die Erfindung führt auch auf eine Hartschaumstofffolie, die vorzugsweise nach einem erfindungsgemäßen Verfahren hergestellt ist. Diese ist gebildet aus einem thermoplastischen, extrudierten, insbesondere teilkristallenen und/oder geschlossenporigen Kunststoff-Hartschaummaterial mit einer sich senkrecht zur Hartschaumstofffolienflächenerstreckung verstreckten Polymerstruktur, wobei die Hartschaumstofffolie bzw. zumindest eine ihrer Flächenseiten, vorzugsweise beide sich senkrecht zur Dickenerstreckungsrichtung erstreckenden Flächenseiten (Flächen mit der größten Flächenerstreckung) durch einen Messer-Schneidprozess erhalten sind, insbesondere derart, dass durch den Schneidprozess keine Teilversiegelung der Flächenseite auftritt bzw. getreten ist. Die erfindungsgemäße Hartschaumstofffolie hat eine Mindestdickenerstreckung von 2mm, bevorzugt von 3mm, ganz besonderes bevorzugt von 4mm, ganz besonders bevorzugt von 5mm und/oder von weniger als 10cm, bevorzugt weniger als 5cm, noch weiter bevorzugt weniger als 1cm,besonders bevorzugt im Bereich von 1mm bis 5mm.

Ganz besonders bevorzugt weisen die eine größte Flächeerstreckung aufweisenden Flächenseiten rechtwinklig zueinander verlaufende Seitenkanten mit einer jeweiligen Mindestlängenerstreckung von 50cm auf. Bevorzugt ist die Längenerstreckung sämtlicher, die Flächenseiten begrenzenden Seitenkanten aus einem Wertebereich zwischen 90cm und 2,5m, insbesondere zwischen 1m und 2m, noch weiter bevorzugt zwischen 1m und 1,5m gewählt. Auf eine solche Ausführungsform ist die Erfindung selbstverständlich nicht beschränkt. Das erfindungsgemäße Verfahren kann beispielsweise auch für sehr lange bis endlose Blöcke angewendet werden, insbesondere mit anschließendem Aufwickeln des abgetrennten Folienabschnitts.

Die Erfindung führt zudem auch auf ein Sandwich-Verbundelement, dessen mindestens eine Kernschicht aus einer erfindungsgemäßen Hartschaumstofffolie gebildet ist, die sandwichartig zwischen mindestens zwei auf ihren Flächenseiten angeordneten Deckschichten angeordnet ist, die fest mit der Kernschicht verbunden sind.

Weitere Vorteile, Merkmale und Einzelheiten der Erfindung ergeben sich aus der nachfolgenden Beschreibung bevorzugt der Ausführungsbeispiele sowie anhand der Zeichnungen.

Diese zeigen in:
- Fig. 1: eine ausschnittsweise Darstellung einer nach dem Konzept der Erfindung ausgebildeten Hartschaumstofffolien-schneidevorrichtung zur Durchführung des erfindungsgemäßen Verfahrens, wobei aus Übersichtlichkeitsgründen die Heizmittel nicht gezeigt sind,
- Fig. 2: eine Seitenansicht auf die Vorrichtung gemäß Fig. 1 entlang einer Messerbewegungsachse M_{b} die senkrecht zu einer Vorschubachse V_{b} und senkrecht zu einer Dickenerstreckungsachse Vₛ verläuft,
- Fig. 3: eine vergrößerte Darstellung des Details X aus Fig. 2,
- Fig. 4: eine Draufsicht auf die Vorrichtung gemäß Fig. 1 entlang der Dickenerstreckungsrichtung Vₛ.

In den Figuren sind gleiche Elemente und Elemente mit der gleichen Funktion mit den gleichen Bezugszeichen gekennzeichnet.

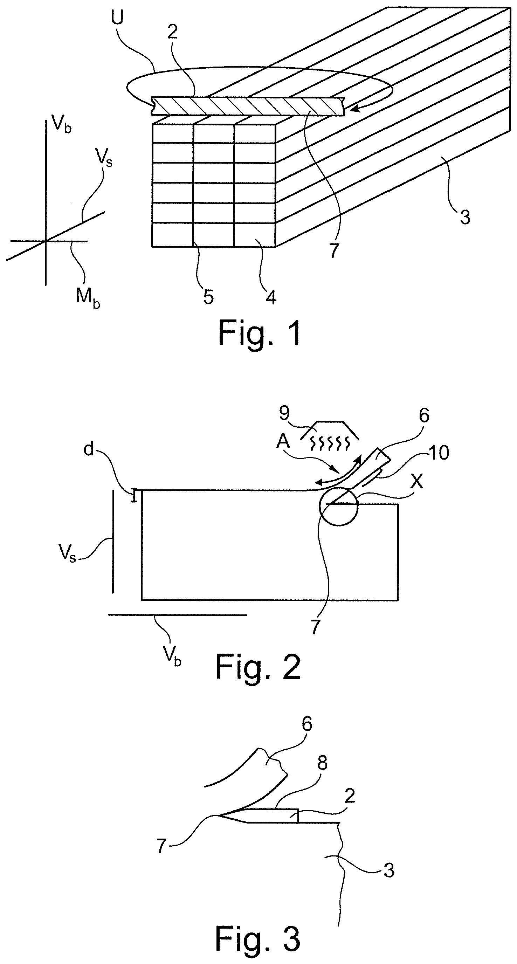

In den Fig. 1 bis 4 ist aus unterschiedlichen Ansichten und teilweise in Detailvergrößerung eine nach dem Konzept der Erfindung ausgebildete Hartschaumstofffolienschneidvorrichtung 1 gezeigt. Diese umfasst Relativbewegungsmittel, um eine Relativbewegung entlang der eingezeichneten Vorschubachse V_{b} zwischen einem Messer 2 und einem Schaumstoffblock 3 zu erzeugen, der Schaumstoffblock 3 besteht im gezeigten Ausführungsbeispiel ausschließlich aus einem Kunststoff-Hartschaummaterial, insbesondere PET. Das Kunststoff-Hartschaummaterial ist ein thermoplastisches, teilkristallines Kunststoffmaterial mit geschlossenzelligen Poren, das durch Extrudieren erhalten wurde. Beim Extrusionsvorgang wird Kunststoffmaterial mit Treibgas in einem Extruder großen Scherkräften unterworfen und am Ende des Extruders durch eine Düse gepresst - nach der Düse kommt es zu dem gewünschten Aufschäumvorgang durch Expansion des Gases. Durch den Extrusionsvorgang, genauer das Pressen durch eine Düse wird eine in der Extrusionsrichtung verstreckte Polymerstruktur erhalten. Der Schaumstoffblock 3 besteht in dem gezeigten Ausführungsbeispiel aus einer Vielzahl von Körpersegmenten 4 die flächig miteinander verschweißt (alternativ verklebt) sind, sodass sich in einer Draufsicht entlang einer später noch zu erläuterten Dickenerstreckungsachse Vₛ eine Versteifungsstruktur von sich hier beispielhaft kreuzenden Versteifungsstegen 5 resultiert, die entweder aus durch den Schweißprozess angeschmolzenen Kunststoff bestehen oder alternativ aus Klebstoff. Neben der gezeigten Versteifungsstruktur aus sich kreuzenden Versteifungsstegen ist alternativ die Realisierung von ausschließlich parallelen Versteifungsstegen möglich oder von alternativen Geometrien, wie sie beispielsweise in den Fig. 3 bis 8 der EP 1 536 944 B2 gezeigt sind. Auch ist es beispielsweise zum Herstellen von kleinflächigen Hartschaumstofffolien möglich, auf Versteifungsstege zu verzichten.

Unabhängig von der konkreten Anordnung der Körpersegmente bzw. Versteifungsstege weist jedenfalls der Schaumstoffblock 3 bzw. das Kunststoff-Hartschaummaterial des Schaumstoffblocks eine verstreckte Polymerstruktur, entlang der Dickenerstreckungsachse Vₛ auf, die senkrecht zur Vorschubachse V_{b} sowie senkrecht zu einer Messerbewegungsachse M_{b} verläuft. Anders ausgedrückt ist die Druckfestigkeit entlang der Dickenerstreckungsachse Vₛ höher bzw. größer als senkrecht hierzu.

In dem gezeigten Ausführungsbeispiel ist das Messer 2 als in einer Umfangsrichtung U umlaufendes Bandmesser realisiert, welches im Bereich des Schaumstoffblocks 3 relativ zu dem Schaumstoffblock 3 entlang der vorerwähnten Messerbewegungsachse M_{b} verstellt wird. Während des Schneidprozesses wird so die Hartschaumstofffolie erzeugt, in den einen jeweils bereits abgetrennten Folienabschnitt 6 entlang der Vorschubachse V_{b} nach Passieren einer glatten Schneidkante 7 des Messers 2 aufgrund der Relativbewegung von Schaumstoffblock 3 und Messer 2 entlang der Vorschubachse V_{b} immer länger wird. Die Schneidkante verläuft parallel zur Messerbewegungsachse M_{b} und senkrecht zu der Vorschubsachse V_{b} und der Dickenerstreckungsachse Vₛ.

Aus der Zusammenschau der Fig. 2 und 3 ist zu erkennen, dass der abgetrennte Folienabschnitt 6 in einem Bereich hinter der Schneidkante 7 des Messers 2 von dem Messer 2 durch elastisches Biegen um eine Biegeachse A umgebogen wird die Biegeachse A erstreckt sich parallel zur Messerbewegungsachse M_{b}. Durch das elastische Biegen wird eine großflächige Anlage des abgetrennten Folienabschnittes 6 an der vom verbleibenden Schaumstoffblock 3 abgewandten Messerflächenseite 8 verhindert.

Um ein derartiges elastisches Verbiegen des abgetrennten Folienabschnittes 6 überhaupt erst zu ermöglichen, wird das Kunststoff-Hartschaummaterial mithilfe von Heizmitteln 9, hier beispielhaft in der Form eines Infrarotstrahlers auf eine Bearbeitungstemperatur erwärmt, bei der das Kunststoff-Hartschaummaterial nicht schmilzt, sich jedoch elastisch verformen lässt, um den abgetrennten Folienabschnitt 6, wie gezeigt vom Messer 2 abheben zu können. Im vorliegenden Ausführungsbeispiel beträgt die Bearbeitungstemperatur 80°C. Abheben und damit Biegen des abgetrennten Folienabschnittes 6 sind in den gezeigten Ausführungsbeispielen (siehe Fig. 2) entsprechende Biegemittel 10 in Form einer Rampe vorgesehen.

Zu dem Infrarotstrahler alternative Heizmittel sind realisierbar - erst durch das Erwärmen des Hartschaummaterials auf die Bearbeitungstemperatur können vergleichsweise dicke Hartschaumstofffolien, insbesondere mit einer sich parallel zur Dickenerstreckungsachse Vₛ erstreckenden Dickenerstreckung d von über 2mm produziert werden, deren Polymerstruktur in Dickenerstreckungsrichtung d verstreckt ist.

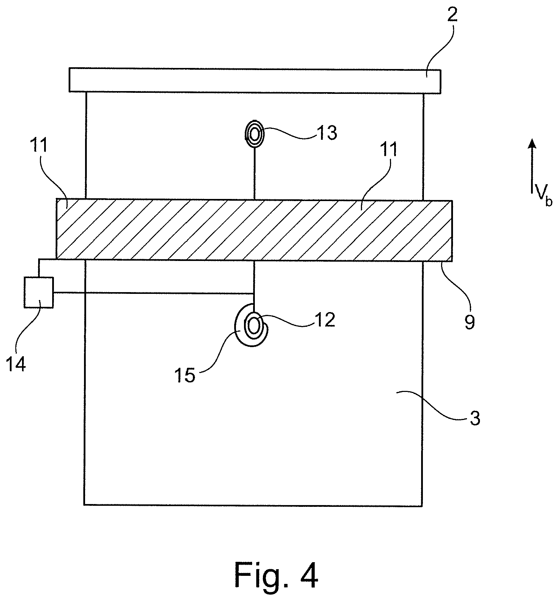

Die Fig. 4 zeigt einen Ausschnitt der erfindungsgemäßen Vorrichtung 1, welche sich in der Vorschubachse V_{b} vor dem Messer 2 befindet. In der Draufsicht der Fig. 4 entlang der Dickenerstreckungsachse ist zu erkennen, dass oberhalb des Schaumstoffblocks 3 die Heizmittel 9 angeordnet sind, welche als Infrarotheizmittel ausgebildet sind. Die Infrarotheizmittel umfassen dabei einzelne Heizeinrichtungen 11, welche schräg zur Vorschubachse V_{b} angeordnet sind, um eine gleichmäßige Erwärmung oder Erhitzung des Schaumstoffblocks 3 über die gesamte Breite des Schaumstoffblocks 3 sicherzustellen. Wie der Fig. 4 weiter entnommen werden kann, sind die Heizmittel 9 breiter ausgebildet als die Breite des Schaumstoffblocks 3, was ebenfalls zu einer gleichmäßigen Erwärmung des Schaumstoffblocks 3 über die gesamte Breite des Schaumstoffblocks 3 beiträgt.

In der Fig. 4 ist ein erster Temperatursensor 12 sowie ein zweiter Temperatursensor 13 vorgesehen, wobei zumindest der erste Temperatursensor 12 datentechnisch mit einer Regeleinheit 14 verbunden ist, die ihrerseits wiederum mit den Heizmitteln 9 verbunden ist und eine Regelung der Heizmittel 9, insbesondere eine Steuerung der Heizleistung oder Strahlungsleistung der Heizmittel 9, beeinflussen oder regeln kann. Im Beispiel der Fig. 4 können neben einer entsprechenden Verbindung des ersten Temperatursensors 12 mit der Regeleinheit 14 auch eine weitere Verbindung des Temperatursensors 13 mit der Regeleinheit 14 bereitgestellt werden, sodass auch die von dem Temperatursensor 13 gemessenen Oberflächentemperaturen des Schaumstoffblocks 3 als Regelgröße der Regeleinheit 14 zur Verfügung gestellt werden können.

Im Beispiel der Fig. 4 sind die Temperatursensoren 12 und 13 als Pyrometer ausgebildet und messen kontaktlos die Oberflächentemperatur des Schaumstoffblocks 3 senkrecht nach unten entlang der Dickenerstreckungsachse Vₛ. Es können jedoch auch andere Anordnungen und Messrichtungen der Temperatursensoren 12 und/oder 13 vorgesehen sein. Vorteilhaft ist jedoch der Temperatursensor 12 zumindest soweit entlang der Vorschubachse vor den Heizmitteln 9 angeordnet oder entsprechend ausgerichtet, dass die jeweils in einem Abschnitt 15 des Schaumstoffblocks gemessene Oberflächentemperatur während des Zeitintervalls, der benötigt wird, um die gemessene Oberflächentemperatur an die Regeleinheit 14 weiterzugeben, eine Stellgröße für die Heizmittel 9 zu erzeugen und die Heizmittel 9 auf eine entsprechende neue oder angepasste Strahlungsleistung einzustellen, dem Zeitintervall entspricht in dem der Schaumstoffblock gerade die Strecke zurückgelegt hat, die dem Abstand zwischen der Messposition 15 und der Position der Heizmittel 9 entspricht. Dies bedeutet mit anderen Worten ausgedrückt, dass Vorschubgeschwindigkeit, Messposition der Oberflächentemperatur und Trägheit des Systems zur Einstellung einer geänderten Strahlungsleistung so aufeinander abgestimmt sind, dass eine optimale Anpassung der Strahlungsleistung an die gemessene Oberflächentemperatur erfolgen kann.

Durch die geregelte Abstrahlung der Heizleistung der Heizmittel 9 kann sichergestellt werden, dass keine zu große Wärmeenergie in den Schaumstoffblock eingetragen wird, die nach dem Abtrennen eines Folienabschnitts eine negative Auswirkung auf den Folienabschnitt, beispielsweise in Form einer Wellenbildung des Folienabschnitts, resultieren kann. Die Heizmittel, insbesondere die Infrarotheizmittel sind dabei so auf das PET-Material oder das PET-Kunststoff-Hartschaummaterial abgestimmt, dass die Eindringtiefe der Infrarotstrahlen und damit die unmittelbare oder primäre Erwärmung des PET-Materials zumindest gleich der Dickenerstreckung oder Stärke der abzutrennenden Folie oder des abzutrennenden Folienabschnitts des Schaumstoffblocks entspricht. Damit wird sichergestellt, dass über die gesamte Schichtstärke oder Stärke des abzutrennenden Folienabschnitts eine ausreichende, wenngleich nicht zu große, Erwärmung gegeben ist, die einerseits ein vorteilhaftes Abheben des abgetrennten Folienabschnitts ermöglicht, gleichzeitig jedoch eine zu starke Erwärmung und damit einen negativen Einfluss auf das hergestellte Produkt, nämlich den abgetrennten Folienabschnitt, verhindert.

### Bezugszeichenliste

- 1: Hartschaumstofffolienschneidvorrichtung
- 2: Messer
- 3: Schaumstoffblock
- 4: Körpersegmente
- 5: Versteifungsstege
- 6: abgetrennter Folienabschnitt
- 7: Schneidkante
- 8: Messerflachseite
- 9: Heizmittel
- 10: Biegemittel
- 12: erster Temperatursensor
- 13: zweiter Temperatursensor
- 14: Regeleinheit
- 15: Abschnitt/Messposition

- Vₛ: Dickenerstreckungsachse
- V_{b}: Vorschubachse
- M_{b}: Messerbewegungsachse

- A: Biegeachse
- d: Dickenerstreckung
- U: Umfangsrichtung

## Patentansprüche

1. Verfahren zum Herstellen einer Hartschaumstofffolie, insbesondere zur Verwendung als Kernschicht in Sandwich-Verbundelementen, bei der die Druckfestigkeit senkrecht zu ihrer Flächenerstreckung höher ist als parallel zu der Flächenerstreckung, aus einem Schaumstoffblock (3) aus einem thermoplastischen, extrudierten, insbesondere teilkristallinem und/oder geschlossenporigem, PET-Kunststoff-Hartschaummaterial mit den Schritten:
- Bereitstellen des Schaumstoffblocks (3), dessen PET-Kunststoff-Hartschaummaterial entlang einer Dickenerstreckungsachse (Vₛ) eine höhere Druckfestigkeit aufweist als senkrecht hierzu,
- Gewinnen der Hartschaumstofffolie aus dem Schaumstoffblock (3) indem durch Schneiden des Schaumstoffblocks (3) entlang einer sich senkrecht zur Dickenerstreckungsachse (Vₛ) erstreckenden Vorschubachse (V_{b}) mittels eines eine Schneidkante (7) aufweisenden Messers (2) ein über die Zeitdauer des Schneidprozesses entlang der Vorschubachse (V_{b}) länger werdender Folienabschnitt (6) von dem Schaumstoffblock (3) abgetrennt wird,
- Abheben des abgetrennten Folienabschnitts (6) von dem Messer (2) durch elastisches Biegen des abgetrennten Folienabschnittes (6) zur Reduzierung der auf das Messer (2) wirkenden Reibkräfte während des Schneidprozesses,
wobei das PET-Kunststoff-Hartschaummaterial, insbesondere der Schaumstoffblock (3) und/oder der abgetrennte Folienabschnitt (6), zumindest abschnittsweise auf eine Bearbeitungstemperatur oberhalb von 40°C und unterhalb der Schmelztemperatur des PET-Kunststoff-Hartschaummaterials erwärmt wird, derart, dass das PET-Kunststoff-Hartschaummaterial so elastisch biegbar wird, dass der abgetrennte Folienabschnitt (6) durch elastisches Biegen nach Passieren der Schneidkante (7) des Messers (2) von dem Messer (2) abhebbar ist, wobei eine Oberflächentemperatur des Schaumstoffblocks an einer in der Vorschubachse (V_{b}) vor der Schneidkante und vor der Position eines zur Erwärmung vorgesehenen Heizmittels angeordneten Position gemessen wird und die gemessene Oberflächentemperatur als Eingangsgröße für die Regelung der Strahlungsleistung des Heizmittels dient.

2. Verfahren nach Anspruch 1,
**dadurch gekennzeichnet,**
**dass** die Erwärmung mit einem Infrarotheizmittel durchgeführt wird, wobei das Infrarotheizmittel derart auf das PET-Kunststoff-Hartschaummaterial abgestimmt ist, dass eine Eindringtiefe der Infrarotstrahlung zumindest gleich groß ist, wie eine die Stärke des abzutrennenden Folienabschnitts (6).

3. Verfahren nach Anspruch 1 oder 2,
**dadurch gekennzeichnet,**
**dass** die Oberflächentemperatur des Schaumstoffblocks kontaktlos gemessen wird.

4. Verfahren nach einem der Ansprüche 1 bis 3,
**dadurch gekennzeichnet,**
**dass** das PET-Kunststoff-Hartschaummaterial, insbesondere der Schaumstoffblock (3) und/oder der abgetrennte Folienabschnitt (6), zumindest abschnittsweise, vorzugsweise vollständig, auf eine Bearbeitungstemperatur oberhalb der Glasübergangstemperatur des PET-Kunststoff-Hartschaummaterials abzüglich 20°C, vorzugsweise oberhalb der Glasübergangstemperatur des PET-Kunststoff-Hartschaummaterials abzüglich 15°C, weiter bevorzugt oberhalb der Glasübergangstemperatur des PET-Kunststoff-Hartschaummaterials abzüglich 10°C, noch weiter bevorzugt oberhalb der Glasübergangstemperatur des PET-Kunststoff-Hartschaummaterials abzüglich 5°C, ganz besonders bevorzugt oberhalb der Glasübergangstemperatur des PET-Kunststoff-Hartschaummaterials erwärmt wird, und/oder dass das PET-Kunststoff-Hartschaummaterial, insbesondere der Schaumstoffblock (3) und/oder der abgetrennte Folienabschnitt (6), zumindest abschnittsweise, vorzugsweise vollständig, auf eine Bearbeitungstemperatur unterhalb von 180°C, noch weiter bevorzugt unterhalb von 150°C, noch weiter bevorzugt unterhalb von 120°C erwärmt wird.

5. Verfahren nach einem der Ansprüche 1 bis 4
**dadurch gekennzeichnet,**
**dass** der Schneidvorgang derart durchgeführt wird, dass die aus dem Schneidvorgang resultierende Hartschaumstofffolie eine senkrecht zur Flächenerstreckung gemessenen Mindest-Dickenerstreckung (d) von 0,5mm, bevorzugt von 3mm, besonders bevorzugt 4mm, ganz besonders bevorzugt 5mm aufweist und/oder von weniger als 10cm, bevorzugt weniger als 5cm, noch weiter bevorzugt weniger als 1cm, besonders bevorzugt im Bereich von 1mm bis 5mm, aufweist.

6. Verfahren nach einem der vorhergehenden Ansprüche,
**dadurch gekennzeichnet,**
**dass** das Messer (2) zum Schneiden entlang einer sich senkrecht zur Dickenerstreckungsachse (Vₛ) und senkrecht Vorschubachse (V_{b}) erstreckenden Messerbewegungsachse (M_{b}) relativ zu dem Schaumstoffblock (3) bewegt, insbesondere angetrieben wird, insbesondere in Form eines in einer Umlaufrichtung (U) umlaufenden Messers (2), bevorzugt eines Bandmesser oder durch eine Hin- und Herbewegung.

7. Verfahren nach einem der vorhergehenden Ansprüche,
**dadurch gekennzeichnet,**
**dass** das Messer (2) an seiner Schneidkante (7) sägezahnfrei ist und/oder als Metallband, insbesondere mit einer maximalen Materialstärke aus einem Wertebereich zwischen 1 und 5 mm aufweist.

8. Verfahren nach einem der vorhergehenden Ansprüche,
**dadurch gekennzeichnet,**
**dass** das elastische Biegen so durchgeführt wird, dass, ggf. bis auf Wechselwirkungen mit der Schneidkante (7) durch den Schneidprozess, keine plastische Dimensionsänderung, bevorzugt keine plastische Verformung, der Hartschaumstofffolie resultiert.

9. Verfahren nach einem der vorhergehenden Ansprüche,
**dadurch gekennzeichnet,**
**dass** der Schaumstoffblock (3) und/oder das PET-Kunststoff-Hartschaummaterial und/oder die Hartschaumfolie eine Dichte aus einem Wertebereich zwischen 40 und 250kg/m³ aufweist.

10. Verfahren nach einem der vorhergehenden Ansprüche,
**dadurch gekennzeichnet,**
**dass** das Hartschaumstoffmaterial gemäß DIN 7726 bei 10% Stauchung eine Druckspannung von größer als 80 kPa aufweist.

11. Verfahren nach einem der vorhergehenden Ansprüche,
**dadurch gekennzeichnet,**
**dass** der Schaumstoffblock (3), insbesondere zeitlich vor dem Schneiden oder während des Schneidens, in einem Ofen auf die Bearbeitungstemperatur erwärmt wird, oder dass der Schaumstoffblock (3) durch Wärme-Bestrahlen, insbesondere mittels eines IR-Strahlers, erwärmt wird, bevorzugt entlang der Vorschubachse (V_{b}) vor und/oder in einem Kontaktbereich zur Schneidkante (7) des Messers (2).

12. Verfahren nach einem der vorhergehenden Ansprüche,
**dadurch gekennzeichnet,**
**dass** der Schaumstoffblock (3) aus einer Mehrzahl von extrudierten Körpersegmenten (4) zusammengesetzt ist, wobei die Körpersegmente (4) an ihren anstoßenden Flächenseiten unter Ausbildung von in Draufsicht entlang der Dickenerstreckungsachse (Vₛ) auf eine Flächenseite der Hartschaumfolie zueinander parallelen oder sich kreuzenden Versteifungslinien miteinander verschweißt und/oder verklebt sind.

13. Hartschaumstofffolienschneidvorrichtung (1), ausgebildet zur Durchführung eines Verfahrens nach einem der Ansprüche 1 bis 12 mit einem Messer (2) sowie Relativbewegungsmitteln zum Relativbewegen des Messer (2) relativ zu dem Schaumstoffblock (3) entlang der Vorschubachse (V_{b}) sowie mit Mitteln zum elastischen Biegen des Folienabschnitts (6),
**gekennzeichnet durch**
Heizmittel (9) zum zumindest abschnittsweisen Erwärmen des PET-Kunststoff-Hartschaummaterials, insbesondere des Schaumstoffblocks (3) und/oder des abgetrennten Folienabschnittes (6), auf eine Bearbeitungstemperatur oberhalb von 40°C und unterhalb der Schmelztemperatur des PET-Kunststoff-Hartschaummaterials, derart, dass das PET-Kunststoff-Hartschaummaterial so elastisch biegbar wird, dass der Folienabschnitt (6) durch elastisches Biegen nach Passieren der Schneidkante (7) des Messers (2) von dem Messer (2) abhebbar ist, wobei ein Temperatursensor zur Messung einer Oberflächentemperatur des Schaumstoffblocks an einer Position in der Vorschubachse (V_{b}) vor der Schneidkante und vor der Position des Heizmittels angeordnet ist und wobei eine Regeleinheit zur Regelung der Strahlungsleistung der Heizmittel in Abhängigkeit zumindest einer Regelgröße vorgesehen ist, wobei eine Regelgröße die gemessene Oberflächentemperatur des Schaumstoffblocks ist.

14. Hartschaumstofffolienschneidvorrichtung nach Anspruch 13,
**dadurch gekennzeichnet,**
**dass** die Heizmittel als Infrarotheizmittel ausgestaktet sind und derart auf das PET-Kunststoff-Hartschaummaterial abgestimmt sind, dass eine Eindringtiefe der Infrarotstrahlung zumindest gleich groß ist, wie eine die Stärke des abzutrennenden Folienabschnitts (6).

15. Hartschaumstofffolienschneidvorrichtung nach Anspruch 13 oder 14,
**gekennzeichnet durch**
einen Temperatursensor zur kontaktlosen Messung der Oberflächentemperatur.

## Claims

1. A method for producing a rigid-foam film, in particular for use as a core layer in sandwich composite elements, in which the compressive strength perpendicular to its surface extension is higher than parallel to the surface extension, from a foam block (3) made of a thermoplastic, extruded, in particular partially crystalline and/or closed-cell, PET-plastic rigid-foam material, the method comprising the steps of
- providing the foam block (3) whose PET-plastic rigid-foam material has a higher compressive strength along a thickness extension axis (Vₛ) than perpendicular thereto,
- obtaining the rigid-foam film from the foam block (3) by separating a film section (6) from the foam block (3) by cutting the foam block (3) by means of a knife (2), which has a cutting edge (7), along a feed axis (V_{b}) extending perpendicular to the thickness extension axis (Vₛ), the film section (6) becoming longer over the duration of the cutting process along the feed axis (V_{b}),
- lifting the separated film section (6) from the knife (2) by elastic bending of the separated film section (6) to reduce the friction forces acting on the knife (2) during the cutting process,
the PET-plastic rigid-foam material, in particular the foam block (3) and/or the separated film section (6), being at least partially heated to a processing temperature above 40°C and below the fusion temperature of the PET-plastic rigid-foam material in such a manner that the PET-plastic rigid-foam material becomes so elastically bendable that the separated film section (6) can be lifted from the knife (2) by elastic bending after passing the cutting edge (7) of the knife (2), a surface temperature of the foam block being measured in a position disposed in the feed axis (V_{b}) in front of the cutting edge and in front of the position of a heating means intended for heating and the measured surface temperature serving as an input variable for regulating the radiation performance of the heating means.

2. The method according to claim 1,
**characterized in that**
the heating is carried out by means of an infrared heating means, the infrared heating means being adapted to the PET-plastic rigid-foam material in such a manner that a penetration depth of the infrared radiation is at least equal to a thickness of the film section (6) to be separated.

3. The method according to claim 1 or 2,
**characterized in that**
a surface temperature of the foam block is measured contactless.

4. The method according to any one of claims 1 to 3,
**characterized in that**
the PET-plastic rigid-foam material, in particular the foam block (3) and/or the separated film section (6), is at least partially, preferably completely, heated to a processing temperature above the glass transition temperature of the PET-plastic rigid-foam material minus 20 °C, preferably above the glass transition temperature of the PET-plastic rigid-foam material minus 15°C, more preferably above the glass transition temperature of the PET-plastic rigid-foam material minus 10°C, even more preferably above the glass transition temperature of the PET-plastic rigid-foam material, and **in that** the PET-plastic rigid-foam material minus 5 °C, particularly preferably above the glass transition temperature of the PET-plastic rigid-foam material, and/or **in that** the PET-plastic rigid-foam material, in particular the foam block (3) and/or the separated film section (6), is at least partially, preferably completely, heated to a processing temperature below 180°C, more preferably below 150 °C, even more preferably below 120 °C.

5. The method according to any one of claims 1 to 4,
**characterized in that**
the cutting process is performed in such a manner that the rigid-foam film resulting from the cutting process has a minimum thickness extension (d) of 0.5 mm, preferably of 3 mm, more preferably of 4 mm, particularly preferably of 5 mm, and/or of less than 10 cm, preferably less than 5 cm, more preferably less than 1 cm, particularly preferably in the range from 1 mm to 5 mm, measured perpendicular to the surface extension.

6. The method according to any one of the preceding claims,
**characterized in that**
for cutting, the knife (2) is moved, in particular driven, relative to the foam block (3) along a knife movement axis (M_{b}) extending perpendicular to the thickness extension axis (Vₛ) and perpendicular to the feed axis (V_{b}), in particular in the form of a knife (2) rotating in a rotation direction (U), preferably a band knife, or by a back-and-forth movement.

7. The method according to any one of the preceding claims,
**characterized in that**
the knife (2) is free of saw teeth at its cutting edge (7) and/or comprises a metal band, in particular having a maximal material thickness from a value range between 1 mm and 5 mm.

8. The method according to any one of the preceding claims,
**characterized in that**
the elastic bending is performed in such a manner that no plastic dimensional changes, preferably no plastic deformation, of the rigid-foam film results from the cutting process, except for interactions with the cutting edge (7), if applicable.

9. The method according to any one of the preceding claims,
**characterized in that**
the foam block (3) and/or the PET-plastic rigid-foam material and/or the rigid-foam film has a density from a value range between 40 kg/m³ and 250 kg/m³.

10. The method according to any one of the preceding claims,
**characterized in that**,
according to DIN 7726, the rigid-foam material has a compressive stress of more than 80 kPa at a compression of 10 %.

11. The method according to any one of the preceding claims,
**characterized in that**
the foam block (3) is heated to the processing temperature in an oven, in particular before the cutting or during the cutting, or **in that** the foam block (3) is heated by heat radiation, in particular by means of an IR radiator, preferably in front of and/or in a contact area to the cutting edge (7) of the knife (2) along the feed axis (V_{b}).

12. The method according to any one of the preceding claims,
**characterized in that**
the foam block (3) is composed of a plurality of extruded body segments (4), the body segments (4) being welded and/or bonded to one another at their contacting surface sides, parallel or crossing stiffening lines being formed as a result when viewing a surface side of the rigid-foam film along the thickness extension axis (Vₛ).

13. A rigid-foam-film cutting device (1), configured for executing a method according to any one of the claims 1 to 12 using a knife (2) and relative-movement means for moving the knife (2) in relation to the foam block (3) along the feed axis (V_{b}) and using means for elastically bending the film section (6);
**characterized by**
heating means (9) for at least partially heating the PET-plastic rigid-foam material, in particular the foam block (3) and/or the separated film section (6), to a processing temperature above 40 °C and below the fusion temperature of the PET-plastic rigid-foam material in such a manner that the PET-plastic rigid-foam material becomes so elastically bendable that the film section (6) can be lifted from the knife (2) by elastic bending after passing the cutting edge (7) of the knife (2), a temperature sensor for measuring a surface temperature of the foam block being disposed in a position in the feed axis (V_{b}) in front of the cutting edge and in front of the position of the heating means and a regulating unit for regulating the radiation performance of the heating means as a function of at least one control variable being provided, a control variable being the measured surface temperature of the foam block.

14. The rigid-foam-film cutting device according to claim 13,
**characterized in that**
the heating means are equipped as infrared heating means are adapted to the PET-plastic rigid-foam material in such a manner that a penetration depth of the infrared radiation is at least equal to a thickness of the film section (6) to be separated.

15. The rigid-foam-film cutting device according to claim 13 or 14,
**characterized by**
a temperature sensor for contactless measuring of the surface temperature.

## Revendications

1. Procédé pour la production d'un film en mousse dure, notamment pour l'utilisation comme couche centrale dans des éléments composites en sandwich, dans lequel la résistance à la compression perpendiculaire à son extension de surface est supérieure à celle parallèle à l'extension de surface, à partir d'un bloc en mousse (3) constitué d'un matériau en mousse dure et en plastique PET thermoplastique, extrudé, notamment partiellement cristallin et/ou à cellules fermées, le procédé comprenant les étapes suivantes :
- la fourniture du bloc en mousse (3) dont le matériau en mousse dure et en plastique PET a une résistance à la compression plus supérieure le long d'un axe (Vₛ) d'extension d'épaisseur que perpendiculairement à celui-ci,
- l'obtention du film en mousse dure à partir du bloc en mousse (3) en séparant une partie de film (6) du bloc en mousse (3) en coupant le bloc en mousse (3) au moyen d'un couteau (2), qui a un tranchant (7), le long d'un axe d'avancement (V_{b}) s'étendant perpendiculairement à l'axe (Vₛ) d'extension d'épaisseur, la partie de film (6) s'allongeant pendant la durée du procédé de coupe le long de l'axe d'avancement (V_{b}),
- soulèvement de la partie de film (6) séparée du couteau (2) par une flexion élastique de la partie de film (6) séparée afin de réduire les forces de friction agissant sur le couteau (2) pendant le procédé de coupe,
le matériau en mousse dure et en plastique PET, notamment le bloc en mousse (3) et/ou la partie de film (6) séparée, étant au moins partiellement chauffé à une température de traitement supérieure à 40°C et inférieure au point de fusion du matériau en mousse dure et en plastique PET de telle manière que le matériau en mousse dure et en plastique PET devienne élastiquement flexible au point que la partie de film (6) séparée peut être soulevée du couteau (2) par flexion élastique après avoir passé le tranchant (7) du couteau (2), une température de surface du bloc en mousse étant mesurée à une position située dans l'axe d'avancement (V_{b}) devant le tranchant et devant la position d'un moyen de chauffage conçu pour le chauffage et la température de surface mesurée servant comme variable d'entrée pour le contrôle de la puissance radiante du moyen de chauffage.

2. Procédé selon la revendication 1,
**caractérisé en ce que**
le chauffage est effectué à l'aide d'un moyen de chauffage à infrarouge, le moyen de chauffage à infrarouge étant adapté au matériau en mousse dure et en plastique PET de telle manière qu'une profondeur de pénétration du rayonnement infrarouge est au moins égale à une épaisseur de la partie de film (6) à séparer.

3. Procédé selon la revendication 1 ou la revendication 2,
**caractérisé en ce**
**qu'**une température de surface du bloc en mousse est mesurée sans contact.

4. Procédé selon l'une quelconque des revendications 1 à 3,
**caractérisé en ce que**
le matériau en mousse dure et en plastique PET, notamment le bloc en mousse (3) et/ou la partie de film (6) séparée, est au moins partiellement, de préférence complètement, chauffé à une température de traitement supérieure à la température de transition vitreuse du matériau en mousse dure et en plastique PET moins 20°C, préférentiellement supérieure à la température de transition vitreuse du matériau en mousse dure et en plastique PET moins 15 °C, de préférence encore supérieure à la température de transition vitreuse du matériau en mousse dure et en plastique PET moins 10°C, de préférence encore supérieure à la température de transition vitreuse du matériau en mousse dure et en plastique PET moins 5°C, de préférence encore supérieure à la température de transition vitreuse du matériau en mousse dure et en plastique PET, et/ou **en ce que** le matériau en mousse dure et en plastique PET, notamment le bloc en mousse (3) et/ou la partie de film (6) séparée, est au moins partiellement, de préférence complètement, chauffé à une température de traitement inférieure à 180 °C, préférentiellement inférieure à 150 °C, de préférence encore inférieure à 120 °C.

5. Procédé selon l'une quelconque des revendications 1 à 4,
**caractérisé en ce que**
le procédé de coupe est effectué de telle manière que le film en mousse dure résultant du procédé de coupe a une extension d'épaisseur (d) minimale de 0,5 mm, de préférence de 3 mm, plus préférentiellement de 4 mm, en particulier de 5 mm, et/ou de moins de 10 cm, de préférence de moins de 5 cm, plus préférentiellement de moins de 1 cm, en particulier dans la plage de 1 mm à 5 mm, mesurée perpendiculairement à l'extension de la surface.

6. Procédé selon l'une quelconque des revendications précédentes,
**caractérisé en ce que**
pour la découpe, le couteau (2) est déplacé, notamment entraîné, par rapport au bloc en mousse (3) selon un axe de mouvement (M_{b}) du couteau s'étendant perpendiculairement à l'axe (Vₛ) d'extension d'épaisseur et perpendiculairement à l'axe d'avancement (V_{b}), notamment sous la forme d'un couteau (2) tournant dans un sens de rotation (U), de préférence un couteau à bande, ou par un mouvement de va-et-vient.

7. Procédé selon l'une quelconque des revendications précédentes,
**caractérisé en ce que**
le couteau (2) est dépourvu de dents de scie au niveau de son tranchant (7) et/ou comprend une bande métallique, notamment ayant une épaisseur de matériau comprise dans une fourchette de valeurs allant de 1 mm à 5 mm.

8. Procédé selon l'une quelconque des revendications précédentes,
**caractérisé en ce que**
la flexion élastique est effectuée de telle manière qu'aucune modification dimensionnelle plastique, de préférence aucune déformation plastique, du film en mousse dure ne résulte du procédé de coupe, à l'exception des interactions avec le tranchant (7), le cas échéant.

9. Procédé selon l'une quelconque des revendications précédentes,
**caractérisé en ce que**
le bloc en mousse (3) et/ou le matériau en mousse dure et en plastique PET et/ou le film en mousse dure a une densité comprise entre 40 kg/m³ et 250 kg/m³.

10. Procédé selon l'une quelconque des revendications précédentes,
**caractérisé en ce que**
selon la norme DIN 7726, le matériau en mousse dure a une contrainte de compression supérieure à 80 kPa à une compression de 10 %.

11. Procédé selon l'une quelconque des revendications précédentes,
**caractérisé en ce que**
le bloc en mousse (3) est chauffé à la température de traitement dans un four, notamment avant la découpe ou pendant la découpe, ou **en ce que** le bloc en mousse (3) est chauffé par rayonnement thermique, notamment au moyen d'un radiateur IR, de préférence devant et/ou dans une zone de contact avec le tranchant (7) du couteau (2) le long de l'axe d'avancement (V_{b}).

12. Procédé selon l'une quelconque des revendications précédentes,
**caractérisé en ce que**
le bloc en mousse (3) est composé d'une pluralité de segments de corps (4) extrudés, les segments de corps (4) étant soudés et/ou collés les uns aux autres au niveau de leurs surfaces de contact, des lignes de raidissement parallèles ou croisées étant formées en conséquence lorsqu'on regarde une surface du film en mousse dure le long de l'axe d'extension d'épaisseur (Vₛ).

13. Dispositif tranchant (1) pour le film en mousse dure, configuré pour l'exécution d'un procédé selon l'une quelconque des revendications 1 à 12 en utilisant un couteau (2) et des moyens pour le mouvement relatif pour déplacer le couteau (2) par rapport au bloc en mousse (3) le long l'axe d'avancement (V_{b}) et en utilisant des moyens pour la flexion élastique de la partie de film (6),
**caractérisé par**
des moyens de chauffage (9) pour le chauffage au moins en partie du matériau en mousse dure et en plastique PET, notamment du bloc en mousse (3) et/ou de la partie de film (6) séparée, à une température de traitement supérieure à 40°C et inférieure au point de fusion du matériau en mousse dure et en plastique PET de telle manière que le matériau en mousse dure et en plastique PET devienne élastiquement flexible au point que la partie de film (6) peut être soulevée du couteau (2) par flexion élastique après avoir passé le tranchant (7) du couteau (2), une capteur de température pour la mesure d'une température de surface du bloc en mousse étant disposée à une position située dans l'axe d'avancement (V_{b}) devant le tranchant et devant la position des moyens de chauffage conçu et une unité de contrôle pour le contrôle de la puissance radiante des moyens de chauffage en fonction d'au moins une variable de contrôle étant prévue, une variable de contrôle étant la température de surface mesurée du bloc en mousse.

14. Dispositif tranchant pour le film en mousse dure selon la revendication 13,
**caractérisé en ce que**
les moyens de chauffage sont équipé comme moyens de chauffage infrarouges et sont adaptés au matériau en mousse dure et en plastique PET de telle manière qu'une profondeur de pénétration du rayonnement infrarouge est au moins égale à une épaisseur de la partie de film (6) à séparer.

15. Dispositif tranchant pour le film en mousse dure selon la revendication 13 ou la revendication 14,
**caractérisé par**
un capteur de température pour la mesure sans contact de la température de surface.
